# EUROPÄISCHE PATENTSCHRIFT

(11) **EP 2 136 995 B1**
(45) Veröffentlichungstag und Bekanntmachung des Hinweises auf die Patenterteilung: **09.03.2011**
(21) Anmeldenummer: 07722071.3
(22) Anmeldetag: 19.03.2007
(51) Int. Cl.: B32B 37/14, B32B 37/12, B32B 3/12, B32B 15/08

(54) **PANEEL SOWIE VERFAHREN ZU DESSEN HERSTELLUNG**
PANEL AND METHOD FOR THE PRODUCTION THEREOF
PANNEAU ET PROCÉDÉ DE FABRICATION

(43) Veröffentlichungstag der Anmeldung: 30.12.2009
(73) Patentinhaber: DLA Ag, 88239 Wangen (DE)
(72) Erfinder: WIESCHERMANN, Jochen, 88682 Salem (DE)
(74) Vertreter: Kiessling, Christian
(86) Internationale Anmeldenummer: PCT/DE2007/000511
(87) Internationale Veröffentlichungsnummer: WO 2008/113306

(56) Entgegenhaltungen:
- EP-A- 0 527 109
- EP-A- 1 029 665
- WO-A-00/78547
- WO-A-01/21906
- WO-A-2004/098884
- GB-A- 2 349 445
- US-A- 4 598 007
- US-A- 5 238 725
- US-A1- 2002 106 482
- US-A1- 2005 161 154

## Beschreibung

Die Erfindung betrifft ein Verfahren zum Herstellen von Paneelen mit mindestens einer Trägerschicht mit einer Ober- und einer Unterfläche und einer an die Unterfläche der Trägerschicht angrenzenden, eine Ober- und Unterfläche aufweisenden Schicht aus einem eine anisotrope Wabenstruktur mit langschmalen Röhrenwaben aufweisende Kunststoffmaterial.

Paneele der eingangs genannten Art werden im Stand der Technik zu unterschiedlichsten Zwecken verwendet. Die bekannten Paneele sind dabei entweder massiv aus einem feuerfesten und auch bei hohen Temperaturen von bis zu 800° Celsius nicht ausgasenden Material wie beispielsweise einem Metall hergestellt, das vergleichsweise schwer ist, oder sie sind massiv aus einem Kunststoffmaterial hergestellt, das vergleichsweise leicht ist, jedoch entweder nicht feuerfest ist und/oder sich bei hohen Temperaturen von bis zu 800° Celsius verformt oder giftige Gase freisetzt. Des Weiteren sind Paneele aus Kompound-Materialien bekannt, die vergleichsweise leicht sind, jedoch bei hohen Temperaturen die Nachteile der beiden ersteren massiven Materialien in sich vereinen.

Derartige Paneele sind beispielsweise aus US 2002/106482A1, WO 01/21906A oder WO 2004/098884A bekannt.

Aufgabe der Erfindung ist es deshalb, ein Verfahren zur Herstellung von Paneelen zu schaffen, die leicht sind und auch bei hohen Temperaturen von bis zu 800° Celsius formstabil und nicht brennbar-feuerresistent sind und dabei auch keine giftigen Gase freisetzen.

Erfindungsgemäß wird diese Aufgabe gelöst durch ein Verfahren mit den Merkmalen des Patentanspruchs 1.

Bevorzugte Ausführungsformen des erfindungsgemäßen Verfahrens sind Gegenstand der Unteransprüche.

Bei den gemäß dem erfindungsgemäßen Verfahren hergestellten Paneelen wird durch die angegebene Merkmalskombination eine besonders effektive Dämpfung einer Wärmeleitung in Richtung ins Innere der Paneel-Vorrichtung erreicht, wodurch eine gegenüber dem Stand der Technik verbesserte, besonders wirksame Temperaturisolierung bei gleichzeitiger besonders ausgeprägter mechanischer Stabilität und Formbeständigkeit auch bei hohen Temperaturen gegeben ist. Die den gemäß dem erfindungsgemäßen Verfahren hergestellten Paneelen eigene Temperaturresistenz verhindert dabei je nach verwendeten Materialien auch weitestgehend einen Austritt giftiger Gase. Ein Austritt giftiger Gase ist dabei durch eine Ausführung mit einer gasimpermeablen Trägerschicht beispielsweise aus einem Metall vollständig vermeidbar.

Gemäß einer ersten bevorzugten Ausführungsform des erfindungsgemäßen Verfahrens ist vorgesehen, dass verflüssigtes Polyurethan auf die Unterfläche der Trägerschicht aufgetragen wird. Alternativ kann verflüssigtes Polyurethan auf die Oberfläche der Schicht aus Kunststoffmaterial aufgetragen werden. Bei großen Waben oder Poren der Schicht aus Kunststoffmaterial und um eine besonders feste Verbindung zwischen Trägerschicht und Kunststoffschicht zu erhalten kann verflüssigtes Polyurethan auf die Unterfläche der Trägerschicht sowie auf die Oberfläche der Schicht aus Kunststoffmaterial aufgetragen werden.

Gemäß einer wichtigen bevorzugten Ausführungsform des erfindungsgemäßen Verfahrens ist vorgesehen, dass das in zähflüssiger Form vorliegende verflüssigte Polyurethan mit Hilfe einer Walze auf die Unterfläche der Trägerschicht und/oder auf die Oberfläche der Schicht aus Kunststoffmaterial aufgetragen wird.

Gemäß entsprechender bevorzugter Ausführungsformen des erfindungsgemäßen Verfahrens ist vorgesehen, dass eine Trägerschicht sowohl auf die Oberfläche aus auch auf die Unterfläche der Schicht aus Kunststoffmaterial aufgebracht wird. Das Verpressen der Trägerschicht bzw. der Trägerschichten mit einer Schicht aus Kunststoffmaterial erfolgt dabei vorzugsweise durch Wirkung eines technischen Vakuums.

Vorzugsweise wird bei dem erfindungsgemäßen Verfahren eine aus einem Metall, insbesondere Aluminium hergestellte Trägerschicht verwendet, wobei alternativ auch eine aus einem geeigneten verformungsfesten, vorzugsweise gasdichten isotropen Kunststoffmaterial hergestellte Trägerschicht Verwendung finden kann. Eine verwendete Trägerschicht weist dabei vorzugsweise eine Dicke von etwa 0,3 mm bis 2,0 mm auf.

Die bei dem erfindungsgemäßen Verfahren verwendete Schicht aus einem eine anisotrope Wabenstruktur mit langschmalen Röhrenwaben aufweisenden Kunststoffmaterial ist vorzugsweise aus Polyetherimid oder Polyethersulfon hergestellt. Die Röhrenwaben dieser Schicht weisen vorzugsweise eine Länge von 2,0 mm bis 50 mm auf, wobei der Durchmesser vorzugsweise von 0,1 mm bis 3,0 mm bemessen ist.

Das erfindungsgemäße Verfahren wird im Folgenden anhand einer bevorzugten Ausführungsform eines so hergestellten Paneels erläutert, das in den Figuren der Zeichnung dargestellt ist. Darin zeigen:
- Fig. 1: eine bevorzugte Ausführungsform eines mittels des erfindungsgemäßen Verfahren hergestellten Paneels in einer Ansicht von schräg oben;
- Fig. 2: das in Fig. 1 dargestellte Paneel in einer Querschnittsansicht.

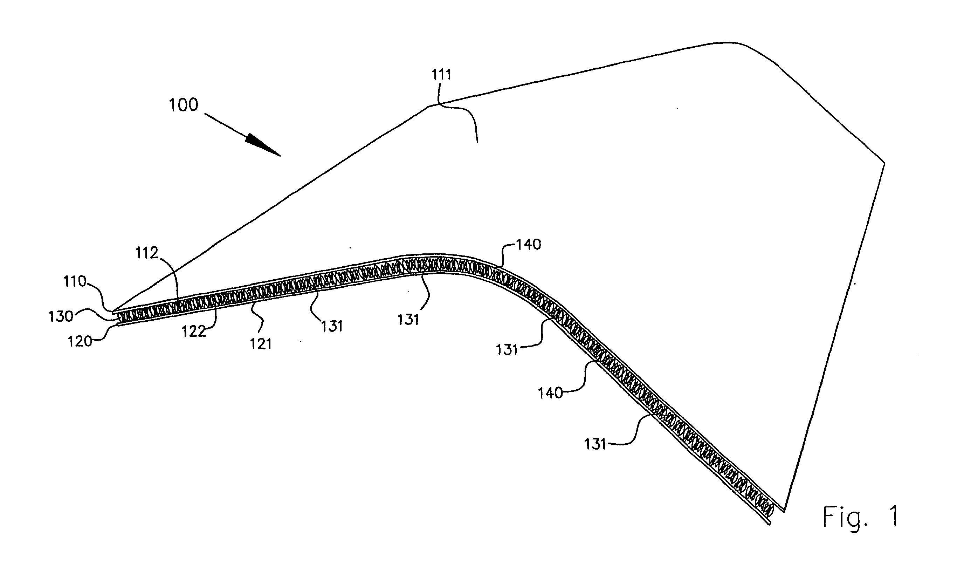

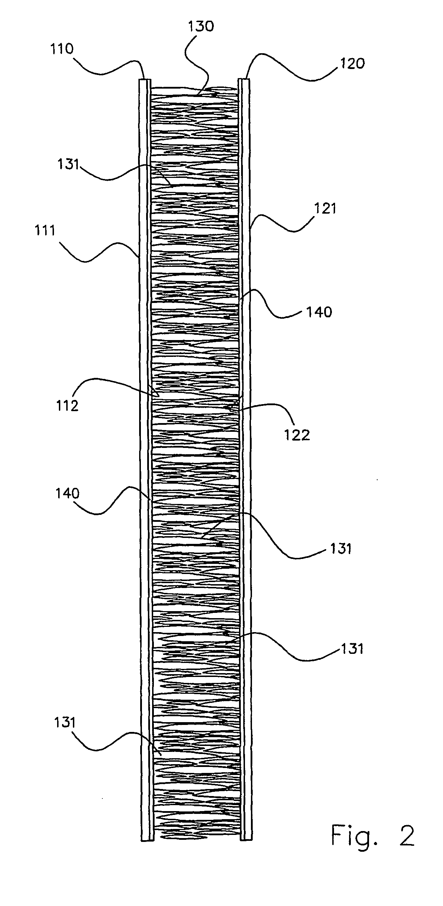

Das in den Figuren 1 und 2 dargestellte Paneel 100 enthält zwei Trägerschichten 110; 120 mit je einer Ober- 111; 121 und einer Unterfläche 112; 122 und einer an die jeweilige Unterfläche 112; 122 der betreffenden Trägerschicht 110; 120 angrenzenden Schicht 130 aus einem porösen Kunststoffmaterial, wobei die Schicht 130 aus porösem Kunststoffmaterial eine anisotrope Wabenstruktur mit langschmalen Röhrenwaben 131 aufweist, und wobei die Längsachse der Röhrenwaben 131 im wesentlichen senkrecht zur jeweiligen Unterfläche 112; 122 der betreffenden Trägerschicht 110; 120 orientiert ist.

Zwischen der Unterfläche 112; 122 einer jeden Trägerschicht 110; 120 und der Schicht 130 aus porösem Kunststoffmaterial ist eine Schicht 140 aus Polyurethan als Bindeschicht vorgesehen. Die Trägerschichten 110; 120 sind aus Aluminium hergestellt und weisen eine Dicke von etwa 0,5 mm auf.

Die Schicht 130 aus einem eine anisotrope Wabenstruktur mit langschmalen Röhrenwaben 131 aufweisende Kunststoffmaterial ist aus Polyetherimid hergestellt. Die Röhrenwaben 131 dieser Schicht 130 weisen eine mittlere Länge von etwa 5 mm auf, wobei die Röhrenwaben 131 im Mittel mit einem Durchmesser von etwa 1,0 mm bemessen sind. Die Schicht 130 aus Kunststoffmaterial weist eine Dicke von etwa 10 mm auf.

Das obige Paneel 100 ist erstellt mittels des erfindungsgemäßen Verfahrens, das die folgenden wichtigen Schritte enthält:
- Schneiden der Schicht (130) aus Kunststoffmaterial derart, dass die Längsachse der Röhrenwaben (131) im wesentlichen senkrecht zu ihrer Ober- und Unterfläche ausgerichtet sind
- Ausrichten der Schicht (130) aus Kunststoffmaterial derart, dass die Längsachse der Röhrenwaben (131) im wesentlichen senkrecht zur Unterfläche (112; 122) der Trägerschicht (110; 120) orientiert ist,

- Verflüssigen von Polyurethan (140) bei einer Temperatur von 120°C bis 180°C,
- Auftragen des verflüssigten Polyurethans (140) auf mindestens eine der Flächen (112; 122) der Trägerschicht (110; 120) und/oder der Schicht (130) aus Kunststoffmaterial,
- Verpressen der Trägerschicht (110; 120) mit der Schicht (130) aus Kunststoffmaterial,
wobei die Röhrenwaben (131) der Schicht (130) eine mittlere Länge von etwa 5 mm aufweisen und im Mittel mit einem Durchmesser von etwa 1,0 mm bemessen sind, und wobei die Schicht (130) aus Kunststoffmaterial eine Dicke von etwa 10 mm aufweist.

Das in zähflüssiger Form vorliegende verflüssigte Polyurethan 140 wird dabei mit Hilfe einer Walze auf die Unterfläche 112; 122 der Trägerschicht 110; 120 sowie auf die Oberfläche der Schicht 130 aus Kunststoffmaterial aufgetragen.

Das Verpressen der Trägerschichten 110; 120 mit der Schicht 130 aus Kunststoffmaterial erfolgt durch Wirkung eines technischen Vakuums.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Verfahren zum Herstellen von Paneelen (100) mit mindestens einer Trägerschicht (110; 120) mit einer Ober-(111; 121) und einer Unterfläche (112; 122) und einer an die Unterfläche (112; 122) der Trägerschicht (110; 120) angrenzenden, eine Ober- und Unterfläche aufweisenden Schicht (130) aus einem eine anisotrope Wabenstruktur mit langschmalen Röhrenwaben (131) aufweisende Kunststoffmaterial, mit den folgenden Schritten:
• Schneiden der Schicht (130) aus Kunststoffmaterial derart, dass die Längsachse der Röhrenwaben (131) im wesentlichen senkrecht zu ihrer Ober- und Unterfläche ausgerichtet sind
• Ausrichten der Schicht (130) aus Kunststoffmaterial derart, dass die Längsachse der Röhrenwaben (131) im wesentlichen senkrecht zur Unterfläche (112; 122) der Trägerschicht (110; 120) orientiert ist,
• Verflüssigen von Polyurethan (140) bei einer Temperatur von 120°C bis 180°C,
• Auftragen des verflüssigten Polyurethans (140) auf mindestens eine der Flächen (112; 122) der Trägerschicht (110; 120) und/oder der Schicht (130) aus Kunststoffmaterial,
• Verpressen der Trägerschicht (110; 120) mit der Schicht (130) aus Kunststoffmaterial,
wobei die Röhrenwaben (131) der Schicht (130) eine mittlere Länge von etwa 5 mm aufweisen und im Mittel mit einem Durchmesser von etwa 1,0 mm bemessen sind, und wobei die Schicht (130) aus Kunststoffmaterial eine Dicke von etwa 10 mm aufweist.

2. Verfahren nach Anspruch 1, **dadurch gekennzeichnet, dass** das verflüssigte Polyurethan (140) auf die Unterfläche (112; 122) der Trägerschicht (110; 120) aufgetragen wird.

3. Verfahren nach Anspruch 1, **dadurch gekennzeichnet, dass** das verflüssigte Polyurethan (140) auf die Oberfläche der Schicht (130) aus Kunststoffmaterial aufgetragen wird.

4. Verfahren nach Anspruch 1, **dadurch gekennzeichnet, dass** das verflüssigte Polyurethan (140) auf die Unterfläche (112; 122) der Trägerschicht (110; 120) sowie auf die Oberfläche der Schicht (130) aus Kunststoffmaterial aufgetragen wird.

5. Verfahren nach Anspruch 2, **dadurch gekennzeichnet, dass** das in zähflüssiger Form vorliegende verflüssigte Polyurethan (140) mit Hilfe einer Walze auf die Unterfläche (112; 122) der Trägerschicht (110; 120) aufgetragen wird.

6. Verfahren nach Anspruch 3, **dadurch gekennzeichnet, dass** das in zähflüssiger Form vorliegende verflüssigte Polyurethan (140) mit Hilfe einer Walze auf die Oberfläche der Schicht (130) aus Kunststoffmaterial aufgetragen wird.

7. Verfahren nach Anspruch 4, **dadurch gekennzeichnet, dass** das in zähflüssiger Form vorliegende verflüssigte Polyurethan (140) mit Hilfe einer Walze auf die Unterfläche (112; 122) der Trägerschicht (110; 120) und auf die Oberfläche der Schicht (130) aus Kunststoffmaterial aufgetragen wird.

8. Verfahren nach einem der vorhergehenden Ansprüche, **dadurch gekennzeichnet, dass** das Verpressen der Trägerschicht (110; 120) mit der Schicht (130) aus Kunststoffmaterial durch Wirkung eines technischen Vakuums erfolgt.

9. Verfahren nach einem der vorhergehenden Ansprüche, **dadurch gekennzeichnet, dass** eine Trägerschicht (110; 120) sowohl auf die Oberfläche aus auch auf die Unterfläche der Schicht (130) aus Kunststoffmaterial aufgebracht wird.

10. Verfahren nach einem der Ansprüche 1 bis 9, **dadurch gekennzeichnet, dass** eine Trägerschicht (110; 120) aus einem Metall hergestellt ist.

11. Verfahren nach Anspruch 10, **dadurch gekennzeichnet, dass** das Metall von Aluminium gebildet ist.

12. Verfahren nach einem der Ansprüche 1 bis 9, **dadurch gekennzeichnet, dass** eine Trägerschicht (110; 120) aus einem isotropen Kunststoffmaterial hergestellt ist.

13. Verfahren nach einem der vorhergehenden Ansprüche, **dadurch gekennzeichnet, dass** eine Trägerschicht (110; 120) eine Dicke von etwa 0,3 mm bis 2,0 mm aufweist.

14. Verfahren nach einem der vorhergehenden Ansprüche, **dadurch gekennzeichnet, dass** die Schicht (130) aus einem eine anisotrope Wabenstruktur mit langschmalen Röhrenwaben (131) aufweisende Kunststoffmaterial aus Polyetherimid hergestellt ist.

15. Verfahren nach einem der vorhergehenden Ansprüche, **dadurch gekennzeichnet, dass** die Schicht (130) aus einem eine anisotrope Wabenstruktur mit langschmalen Röhrenwaben (131) aufweisende Kunststoffmaterial aus Polyethersulfon hergestellt ist.

16. Verfahren nach einem der vorhergehenden Ansprüche, **dadurch gekennzeichnet, dass** die Röhrenwaben (131) der Schicht (130) aus einem Kunststoffmaterial mit einer anisotropen Wabenstruktur eine Länge von 2,0 mm bis 50 mm aufweisen.

17. Verfahren nach einem der vorhergehenden Ansprüche, **dadurch gekennzeichnet, dass** die Röhrenwaben (131) der Schicht (130) aus einem Kunststoffmaterial mit einer anisotropen Wabenstruktur einen Durchmesser von 0,1 mm bis 3,0 mm aufweisen.

## Claims

1. A method for the production of panels (100) comprising at least one carrier layer (110; 120) having a top surface (111; 121) and a bottom surface (112; 122) and a layer (130) of a plastics material having top and bottom surfaces and exhibiting an anisotropic honeycomb structure having elongated and narrow tubular honeycombs (131) and situated adjacent to the bottom surface (112; 122) of said carrier layer (110; 120), involving the following steps:
• Cutting said layer (130) of plastics material such that the longitudinal axis of said tubular honeycombs (131) is substantially perpendicular to the top and bottom surfaces thereof;
• Aligning said layer (130) of plastics material in such a manner that the longitudinal axis of the tubular honeycombs (131) is substantially perpendicular to the bottom surface (112; 122) of said carrier layer (110; 120),
• Liquefying polyurethane (140) at a temperature of from 120 °C to 180 °C;
• Applying said liquefied polyurethane (140) to at least one of the surfaces (112; 122) of said carrier layer (110; 120) and/or of the layer (130) of plastics material;
• Compressing said carrier layer (110; 120) with said layer (130) of plastics material, the tubular honeycombs (131) in said layer (130) having an average length of approximately 5 mm and an average diameter of approximately 1.0 mm, and said layer (130) of plastics material having a thickness of approximately 10 mm.

2. The method according to claim 1, **characterized in that** said liquefied polyurethane (140) is applied to the bottom surface (112; 122) of said carrier layer (110; 120).

3. The method according to claim 1, **characterized in that** said liquefied polyurethane (140) is applied to the top surface of said layer (130) of plastics material.

4. The method according to claim 1, **characterized in that** said liquefied polyurethane (140) is applied to the bottom surface (112; 122) of said carrier layer (110; 120) and also to the top surface of said layer (130) of plastics material.

5. The method according to claim 2, **characterized in that** said liquefied polyurethane (140) provided in high-viscosity form is applied by roller to the bottom surface (112; 122) of said carrier layer (110; 120).

6. The method according to claim 3, **characterized in that** said liquefied polyurethane (140) provided in high-viscosity form is applied by roller to the top surface of said layer (130) of plastics material.

7. The method according to claim 4, **characterized in that** said liquefied polyurethane (140) provided in high-viscosity form is applied by roller to the bottom surface (112; 122) of said carrier layer (110; 120) and to the top surface of said layer (130) of plastics material.

8. The method according to any one of the previous claims, **characterized in that** compression of said carrier layer (110; 120) with said layer (130) of plastics material is carried out by the action of a technical vacuum.

9. The method according to any one of the previous claims, **characterized in that** a carrier layer (110; 120) is applied both to the top surface and to the bottom surface of said layer (130) of plastics material.

10. The method according to any one of claims 1 to 9, **characterized in that** a carrier layer (110; 120) is made of a metal.

11. The method according to claim 10, **characterized in that** the metal used is aluminum.

12. The method according to any one of claims 1 to 9, **characterized in that** a carrier layer (110; 120) is made of an isotropic plastics material.

13. The method according to any one of the previous claims, **characterized in that** a carrier layer (110; 120) has a thickness of approximately 0.3 mm to 2.0 mm.

14. The method according to any one of the previous claims, **characterized in that** said layer (130) of a plastics material exhibiting an anisotropic honeycomb structure having elongated and narrow tubular honeycombs (131) is made of polyether imide.

15. The method according to any one of the previous claims, **characterized in that** said layer (130) of plastics material exhibiting an anisotropic honeycomb structure having elongated and narrow tubular honeycombs (131) is made of polyether sulfone.

16. The method according to any one of the previous claims, **characterized in that** said tubular honeycombs (131) in said layer (130) of plastics material having an anisotropic honeycomb structure have a length of from 2.0 mm to 50 mm.

17. The method according to any one of the previous claims, **characterized in that** said tubular honeycombs (131) in said layer (130) of plastics material having an anisotropic honeycomb structure have a diameter of from 0.1 mm to 3.0 mm.

## Revendications

1. Procédé de fabrication de panneaux (100) comportant au moins une couche support (110 ; 120) présentant une surface supérieure (111 ; 121) et une surface inférieure (112 ; 122), et une couche (130) adjacente à la surface inférieure (112 ; 122) de la couche support (110 ; 120), présentant une surface supérieure et une surface inférieure et constituée d'une matière plastique présentant une structure alvéolaire anisotrope à alvéoles tubulaires (131) allongées, comprenant les étapes suivantes :
• découpe de la couche (130) en matière plastique de telle façon que l'axe longitudinal des alvéoles tubulaires (131) est orienté essentiellement perpendiculairement par rapport à sa surface supérieure et inférieure,
• positionnement de la couche (130) de telle façon que l'axe longitudinal des alvéoles tubulaires (131) est orienté essentiellement perpendiculairement par rapport à la surface inférieure (112 ; 122) de la couche support (110 ; 120),
• liquéfaction de polyuréthane (140) à une température de 120°C à 180°C,
• application du polyuréthane liquéfié (140) sur au moins une des surfaces (112 ; 122) de la couche support (110 ; 120) et/ou de la couche (130) en matière plastique,
• assemblage par compression de la couche support (110 ; 120) avec la couche (130) en matière plastique,
les alvéoles tubulaires (131) de la couche (130) présentant une longueur moyenne d'environ 5 mm et ayant en moyenne un diamètre d'une dimension d'environ 1,0 mm, et la couche (130) en matière plastique présentant une épaisseur d'environ 10 mm.

2. Procédé selon la revendication 1, **caractérisé en ce que** le polyuréthane liquéfié (140) est appliqué sur la surface inférieure (112 ; 122) de la couche support (110 ; 120).

3. Procédé selon la revendication 1, **caractérisé en ce que** le polyuréthane liquéfié (140) est appliqué sur la surface supérieure de la couche (130) en matière plastique.

4. Procédé selon la revendication 1, **caractérisé en ce que** le polyuréthane liquéfié (140) est appliqué sur la surface inférieure (112 ; 122) de la couche support (110 ; 120) ainsi que sur la surface supérieure de la couche (130) en matière plastique.

5. Procédé selon la revendication 2, **caractérisé en ce que** le polyuréthane liquéfié (140) se trouvant sous forme visqueuse est appliqué à l'aide d'un rouleau sur la surface inférieure (112 ; 122) de la couche support (110 ; 120).

6. Procédé selon la revendication 3, **caractérisé en ce que** le polyuréthane liquéfié (140) se trouvant sous forme visqueuse est appliqué à l'aide d'un rouleau sur la surface supérieure de la couche (130) en matière plastique.

7. Procédé selon la revendication 4, **caractérisé en ce que** le polyuréthane liquéfié se trouvant sous forme visqueuse est appliqué à l'aide d'un rouleau sur la surface inférieure (112 ; 122) de la couche support (110 ; 120) et sur la surface supérieure de la couche (130) en matière plastique.

8. Procédé selon une des revendications précédentes, **caractérisé en ce que** l'assemblage par compression de la couche support (110 ; 120) avec la couche (130) en matière plastique a lieu ici par l'effet d'un vide technique.

9. Procédé selon une des revendications précédentes, **caractérisé en ce qu'**une couche support (110 ; 120) est plaquée tant sur la surface supérieure que sur la surface inférieure de la couche (130) en matière plastique.

10. Procédé selon une des revendications de 1 à 9, **caractérisé en ce qu'**une couche support (110 ; 120) est réalisée dans un métal.

11. Procédé selon la revendication 10, **caractérisé en ce que** le métal consiste en de l'aluminium.

12. Procédé selon une des revendications de 1 à 9, **caractérisé en ce qu'**une couche support (110 ; 120) est réalisée dans une matière plastique isotrope.

13. Procédé selon une des revendications précédentes, **caractérisé en ce qu'**une couche support (110 ; 120) présente une épaisseur d'environ 0,3 mm à 2,0 mm.

14. Procédé selon une des revendications précédentes, **caractérisé en ce que** la couche (130) est réalisée dans une matière plastique en polyéthérimide présentant une structure alvéolaire anisotrope à alvéoles tubulaires (131) allongées.

15. Procédé selon une des revendications précédentes, **caractérisé en ce que** la couche (130) est réalisée dans une matière plastique en polyéther sulfone présentant une structure alvéolaire anisotrope à alvéoles tubulaires (131) allongées.

16. Procédé selon une des revendications précédentes, **caractérisé en ce que** les alvéoles tubulaires (131) de la couche (130) réalisée dans une matière plastique à structure alvéolaire anisotrope présentent une longueur de 2,0 mm à 50 mm.

17. Procédé selon une des revendications précédentes, **caractérisé en ce que** les alvéoles tubulaires (131) de la couche (130) réalisée dans une matière plastique à structure alvéolaire anisotrope présentent un diamètre de 0,1 mm à 3,0 mm.
